# EUROPEAN PATENT SPECIFICATION

(11) **EP 1 951 995 B1**
(45) Date of publication and mention of the grant of the patent: **04.01.2012**
(21) Application number: 06805588.8
(22) Date of filing: 21.11.2006
(51) Int. Cl.: F01M 1/16, F01M 1/00, F01M 1/02, F01M 3/04, F16N 13/04, F01M 1/08

(54) **LUBRICATING APPARATUS FOR A DOSING SYSTEM FOR CYLINDER LUBRICATING OIL AND METHOD FOR DOSING CYLINDER LUBRICATING OIL**
SCHMIERVORRICHTUNG FÜR EIN DOSIERSYSTEM FÜR ZYLINDERSCHMIERÖL UND VERFAHREN ZUM DOSIEREN VON ZYLINDERSCHMIERÖL
APPAREIL DE LUBRIFICATION POUR SYSTEME DE DOSAGE D'HUILE LUBRIFIANTE DE CYLINDRE ET PROCEDE DE DOSAGE D'HUILE LUBRIFIANTE DE CYLINDRE

(30) Priority: 21.11.2005 DK 200501629
(43) Date of publication of application: 06.08.2008
(73) Proprietor: Hans Jensen Lubricators A/S, 9560 Hadsund (DK)
(72) Inventor: AAMAND, Jan, DK-6500 Vojens (DK)
(74) Representative: Nielsen, Leif
(86) International application number: PCT/DK2006/000650
(87) International publication number: WO 2007/057027

(56) References cited:
- WO-A-92/20909
- WO-A1-02/35068
- WO-A1-92/20909
- CH-A5- 673 506
- GB-A- 413 475
- US-A- 5 315 971

## Description

### Field of the Invention

The present invention concerns a dosing system comprising a hydraulic lubricating apparatus for cylinder lubricating oil, e.g. in marine engines, the dosing system including
- a supply line and a return line connected with the lubricating apparatus for supplying hydraulic oil,
- a central hydraulic oil supply pump connected with the lubricating apparatus,
- a number of injection units corresponding to a multiple of the cylinder number in the engine, and which are each connected with a dosing unit in the lubricating apparatus;
- an adjusting unit with a setting means in engagement with the dosing unit in order thereby to adjust the volume of injected cylinder lubricating oil in each lubricating stroke;
- a supply line for cylinder lubricating oil;
- a controllable actuator/motor engaging the setting means for setting it; and
- a computer system for controlling, monitoring and detecting the functions of the lubricating apparatus.

Moreover, the invention concerns a method for a dosing cylinder lubricating oil, e.g. in marine engines, the method including
- supplying hydraulic oil pressure via a feed and a return of hydraulic oil to and from a lubricating apparatus by using a hydraulic oil supply system connected with the lubricating apparatus;
- supplying and injecting cylinder lubricating oil via a number of injection units (51) corresponding to a multiple of the cylinder number in the engine, and which are connected with each their dosing unit in the lubricating apparatus; and
- a computerised controlling, monitoring and detecting the functions of the method;
- bringing a setting means to engage the dosing unit in order thereby to enable adjusting the volume of injected cylinder lubricating oil by a lubricating stroke;
- setting the setting means by a controllable actuator/motor engaging the setting means.

### Background of the Invention

Lubricating apparatuses are traditionally designed as pumping units which are mounted in close association with respective cylinders and which are connected with a feeding reservoir for lubricating oil and with lubricating points in the form of oil injection nozzles at different points on the cylinder wall. Each pump unit includes a plurality of reciprocating pumps that feed various lubricating points with oil and which are driven by a common rotating control shaft with cams provided thereon. By the rotation of the shaft, the cams with pressing heads act on respective axially displacing pistons which are spring biased in direction towards the control shaft, so that the pistons at the rotation of the shaft will perform reciprocating movements for activating the pistons of the reciprocating pumps.

For many years, lubricating apparatuses have operated under the condition that the discharge pressure from the piston pumps was not to be very great, as it is a fixed standard that the oil is to be injected into the cylinder during the upwards return stroke of the engine piston, i.e. during the compressing action, however before the subsequent power stroke by the ignited combustion. Hereby, it has been necessary to operate with injection or pump pressures of the magnitude 10 bar.

In recent years it has been proposed to increase the efficiency of the lubrication by injecting the oil through pressurised atomising nozzles for achieving oil mist lubrication during the upwards movement of the piston. However, hereby the oil is applied a far higher pressure for ensuring fine atomisation through atomising nozzles, e.g. a pressure up to 100 bar or more.

Furthermore, in recent years there has been a tendency that electronically based diesel engines are produced to a wider extent, and on these engines the mechanical drives traditionally used for driving mechanical lubricating apparatuses have been removed.

Lubricating points will thus, as mentioned in the present application, include oil injecting nozzles and/or pressurised atomising nozzles.

In both systems, the control shaft is driven through a direct or indirect mechanical coupling with the crankshaft of the engine, whereby it is possible to provide power for the activation of pumps and at the same time to achieve synchronisation between the crankshaft of the engine and the control shaft of the lubricating apparatus.

A pump unit may e.g. include a box-shaped apparatus housing, from where connecting pipes extend to the lubricating points on the associated engine cylinder, e.g. in a number of 6-24.

The pistons are traditionally operated by means of activation cams/rocker arms on a through-going control shaft which is rotated synchronously with the crankshaft of the engine. The pistons are spring biased towards the activation cams. There is provided a set screw defining the extreme position of an associated activation cam. The set screws may be operated for determining individual operative strokes of the pistons and thereby the associated yield of the individual piston pumps.

By lubrication according to the invention, it is possible for the user to operate with controlling injection timing for a synchronised lubrication, which is timed according to the rotation of the crank, or an unsynchronised cylinder lubrication, i.e. a cylinder lubrication that does not depend on the rotation and angular position of the crank.

Furthermore, there is an increasing demand for a flexible and easy adjusting of the controlled feeding cylinder lubrication oil portion for the immediate demand of the engine depending on diverse measurable engine parameters. It is also desirable to adjust the timing concurrently with the actual operating situation of the engine in a flexible way. All these adjustments are preferably to be controlled centrally.

Driving the lubricating apparatuses synchronously with the engine speed is electronically feasible, but extensive and costly. With such a system, the timing can be changed immediately. Changing the fed cylinder lubricating oil portion is, however, more difficult to control.

As the cylinder lubricating oil is typically to be dosed with one portion per engine revolution, the only possibility of adjusting the dosage is to change the stroke of the pumps. A system for this purpose is e.g. described in DK patent application 4998/85. This system is operated by a cam disk mechanism for adjusting the pump stroke in dependence on the engine load. Changing this dependence may only be effected by changing the cam disks with other cam disks with a different transfer function.

It has also been proposed to adjust the pump stroke by means of a controllable motor, e.g. a step motor. This has been used for point lubrication, but it is difficult to establish in connection with conventional lubricating apparatuses. Such a system is e.g. disclosed in International patent application WO 02/35068 A1.

Furthermore, from DE 28 27 626 there is known a lubricating system based on lubricating oil supplied in measured quantities for predetermined time intervals through openings in the cylinder wall. Here, there is not indicated any possibility of a stepless controlling of the dosing that is to be performed at the individual lubricating points.

Moreover, from WO 92/200909 A1 there also is known a lubricating system of the type mentioned in the introduction. Herein, volumetric measuring and dosing units which are filled with oil between the lubricating strokes are used. Moreover this document discloses the use of individual dosing units each of which is actuated by the setting means. This document neither discloses that a number of dosing units are activated by one common setting means nor that a slide shall be provided between the setting means and each of the pump pistons.

From CH 673 506 A there also is known a lubricating system of the type mentioned in the introduction. This document disclose the use of a number of dosing pumps being activated by a common setting means in the form of a threaded rod in connection with a threaded nut. There is disclosure of a supply line and a return line connected with the lubricating apparatus for supplying hydraulic oil. However there is no disclosure of a respective valve for the supply line and the return line.

In connection with traditional cylinder wall lubrication, it has hitherto been the practice to use simple spring-biased check valves that can resist the internal pressure in the cylinder, but which yield to a slightly higher external injection pressure. However, in connection with pressurised atomised injection, it is desirable and necessary that the valve system opens only at a much higher oil pressure in order that the oil injection can assume the character of a pressurised atomising injection right from the beginning. We are hereby speaking of a pressure differential factor of up to several hundred percent.

### Object of the Invention

It is the purpose of the present invention to indicate a method and a dosing system comprising a hydraulically driven lubricating apparatus whereby it is possible to establish the cylinder lubrication in a way whereby it is possible to achieve a flexible, electronically controlled, central stepless control of the dosing to the lubricating points as well as simple control of the timing.

### Description of the Invention

The lubricating apparatus according to the invention is peculiar in comprising
- a cylinder block with a number of dosing units, each including a pump piston mounted in a pump chamber as well as a hydraulic slide interacting with the setting means and the pump piston and which hydraulic slide is provided in a slide chamber extending largely coaxially with the pump chamber and which may be pressurised with hydraulic oil via the supply line;
- a respective valve for the supply line and the return line thereby feeding and returning of the hydraulic oil for pressurising said slide chamber; and that
- the setting means includes an eccentric shaft engaging a contact plate which is disposed sliding in a recess between the eccentric shaft and the hydraulic slides of the lubricating apparatus

The method according to the invention is peculiar in that it includes
- actuating valves for activating the dosing units, each including a pump piston mounted in a pump chamber as well as a hydraulic slide interacting with the setting means and the pump piston and which hydraulic slide is provided in a slide chamber extending largely coaxially with the pump chamber and thereby feeding and returning of the hydraulic oil for pressurising said slide chamber with hydraulic oil for activating said slide that interacts with the setting means and a pump piston for pumping a portion of lubricating oil at a lubricating point; and
- setting the amount of lubricating oil per pump stroke by rotating an eccentric shaft engaging a contact plate which is disposed sliding in a recess between the eccentric shaft and the hydraulic slides of the lubricating apparatus.

In general, the lubricating apparatus and the method operates in that at each timing point/lubricating point of time, a set of valves may be controlled, and hence also the delivery of system/hydraulic oil in order to perform the stroke of the dosing piston at a predetermined point, as one may thus connect and disconnect a system pressure on the hydraulic slide - or simultaneously on a group of hydraulic slides - with one or more valve sets which are preferably provided in the form of solenoid valves.

Various systems may be provided for adjusting the length of the stroke. However there is provided a superior adjustment of stroke length with a setting means that includes an eccentric shaft, whereby the stroke can be adjusted in common for all dosing units in a cylinder block. Besides, it is also possible to reset the stroke length as well as to enable performing the above mentioned adjusting of the height of the setting means.

By providing a contact plate with great width in relation to the contact surface of the slide, there is always achieved contact between a surface and the eccentric shaft and distribution of the pressure as well. An embodiment of the dosing system according to the invention is peculiar in that a monitoring sensor is associated with the lubricating apparatus, preferably with each dosing unit, for detecting performed stroke and/or performed dosing of cylinder lubricating oil portion. The monitoring sensor may include monitoring means that are based on a flow measurement, e.g. by using a rotor in the flow, or a ball that is lifted by the flow, or monitoring means based on measuring the movement of the dosing piston. The monitoring may also be based on a combination of these measurements.

According to a further embodiment of the dosing system according to the invention, the computer system includes
- a decentralised computer for controlling timing and stroke setting for the dosing units in an associated cylinder block; and
- a central computer, which preferably includes a main computer and a backup computer, for changing relevant operation data, monitoring, logging etc.

The decentralised computer is thus used for controlling timing and stroke length setting for the dosing units in an associated cylinder block. Control of the stroke setting is thus established via a control via the controllable motor that regulates the angular position of the eccentric shaft, thereby setting a desired cylinder lubricating oil volume. Control of the timing is effected via the valves, as these may be opened/closed and thereby establish a connection and disconnection of a system pressure on the system oil on the hydraulic slides at any point of time for lubrication.

By this solution with a hydraulic lubricating apparatus, one may thus adjust the stroke and the time electronically, and it is thus possible to use arbitrary lengths of strokes/point of time. This is possible as the hydraulic lubricating apparatus uses the hydraulic/system oil which via the valves performs the stroke at a predetermined point of time which is controlled electronically so that a largely stepless adjusting of the amount of lubricating oil fed to each cylinder in a single pump stroke for the lubricating apparatus may be achieved in a electronically controlled way.

Thus it is possible to have several sets of valves and to let several groups of lubricating points have their own timing in all cylinders, or in some of the cylinders. By the embodiments shown in the appended drawings, there is described a solution where the stroke may be regulated in total, but an alternative embodiment may include that to each of the previously mentioned groups of lubricating points it is enabled that the height of the setting means is adjusted. This may e.g. be effected by using a spacer or plate device which via a conical screw may provide a displacement in height of the setting means. Over a cycle, there may thus be performed a cyclical blocking of a group of lubricating points for a cylinder and/or a cyclical blocking of a set of valves. The apparatus according to the invention may be used for traditional lubrication by using check valve and accumulator at the injection point and for e.g. SIP lubrication. The advantage of the invention and possibilities of saving would be equally attractive irrespective of the lubrication principle.

By setting desired cylinder lubricating oil volume and connection and disconnection of a system pressure on the hydraulic slide at each time for lubrication, a regulation of the amount of lubricating oil is attained so that it is possible to regulate the amount of lubricating oil at a given number of lubricating points. The number of lubricating points with possibility of regulating the amount of lubricating oil depends on how flexible regulation a user wants.

With the apparatus according to the invention is ensured an automatic shifting between the lubricating points where regulation is performed by using a suitable number of valves for optional blocking of system oil to a dosing unit. Typically, however, there will be used one valve for system oil supply to all dosing units in a lubricating apparatus, but it will also be possible to use more valves, or even one valve per dosing unit, if the option of a particularly flexible regulation is desired.

The applied regulation may be mounted as a separate unit which may substitute existing lubricating apparatuses, or may be supplied as a new unit. The dosing system according to the invention is thus advantageous in that it may be used in installations irrespectively whether they are based on oil injection or pressure atomisation. In some situations, use of an apparatus according to the invention will necessitate installation of a separate hydraulic system if an engine does not have sufficient hydraulic capacity. A hydraulic system for feeding hydraulic oil to a dosing system according to the invention may be constructed in any suitable way that enables providing the system oil pressure for activating the dosing units for establishing lubricating oil injection.

The lubrication oil dosage regulation is controlled by the electronic control of the decentralised computers of the computer system of the engine and the valves so that the amount of hydraulic oil for a slide at the individual lubricating points is interrupted depending on the actual need and load level. In principle, it may be said that by closing a valve for the slide of a dosing unit for a lubricating point regulation is enacted by one or more of the lubricating points of the lubrication apparatus being "by-passed" in a lubricating stroke, and the lubrication thereby established over a period of time will enable an approximately stepless adjustment of the portion or amount for a cylinder. This approximately stepless quantitative adjusting for the cylinder occurs independently of the adjustability of the quantitative adjusting from the dosing units, but may be combined with quantitative adjusting of the stroke of the piston pumps by turning the eccentric shaft.

With a lubricating oil amount regulation with an apparatus according to the invention, a programming of the electronic control of the decentralised computers and central computer of the computer system may be performed. With a lubricating apparatus intended for feeding ten lubricating points, a 10% reduction may thus be effected by a lubricating point being bypassed in each succeeding cycle. After 10 cycles, each of the lubricating points would have been skipped. Regardless of this skipping, by using the system according to the invention, lubrication of every cylinder is performed in each cycle. This lubrication will, however, not necessarily occur at every lubrication point of the cylinder.

According to a further embodiment of the dosing system according to the invention, the lubricating apparatus is made of the following components:
- A base unit supplying system pressure and lubricating oil to the apparatus. Besides, there is possibility of heating the lubricating oil by means of a heater mounted in the base unit.
- A setting unit and a controllable motor, preferably a DC motor used for "turning" an eccentric shaft, whereby the stroke of the pump piston can be adjusted.

According to a further embodiment, the method according to the invention is peculiar in that a flushing is provided via a communication duct between at least two juxtaposed slide chambers in order to achieve cooling.
- The cylinder blocks where the pump and monitoring section itself is incorporated. A cylinder block may be adapted with a slide piston and a pump piston for one or more lubricating points. One cylinder block is, however, to be provided with slide piston and pump piston for two or more lubricating points if it is desired to connected slide chambers with the intention of flushing with oil and thereby establish cooling of the cylinder block. The block may easily be mounted/dismounted as the unit only requires loosening of two screws (besides the pipes for the individual lubricating points).

For activating and timing lubricating strokes, a hydraulic pressure is applied which is fed to the apparatus by opening and closing two valves, one at the inlet side (pressure - in) and one at the outlet side (pressure - return).

Typically, there will be one lubricating apparatus per cylinder. However, it is possible to section a lubricating apparatus so that it is possible to mount several sets of solenoid valves, and in this way to provide the possibility of different activating times. This enables a lubricating apparatus to feed a plurality of cylinders.

Typically, a hydraulic lubricating apparatus will have up to 12 lubricating points which are sectioned in e.g. groups of two or three, so that possible failing blocks can be readily replaced. In principle, all lubricating points can be gathered in one section. Lubricating apparatuses with more than 12 lubricating points will also be possible. In these cases, it is preferred to mount more accumulators or possibly larger accumulators for lubricating oil.

In order that the central computer can monitor the function of the lubricating apparatus, there is possibility of monitoring the correct "hitting" of the individual lubricating apparatuses and monitoring that sufficient lubricating oil is present. According to a preferred embodiment, at each lubricating point there will be fitted at sensor emitting signal when the hydraulic piston and/or the slide are/is at the bottom position and in this way it is ensured that the stroke is performed.

Moreover, at the same time there is possibility to mount a level alarm on the lubricating apparatus itself. The level alarm may either be mounted directly in the apparatus or on the supply tank for the latter.

As an alternative to the described flow-monitoring, it is possible to transfer the flow-monitoring principle known from mechanical lubricating apparatuses. By means of an induction sensor, a steel ball will thus be detected - when no flow is present, the ball "falls to the bottom", activating the alarm.

The stroke length may be adjusted simultaneously for all lubricating points, however, possibly with individual adjusting of individual lubricating points. The common adjusting of the stroke is performed electronically controlled by the central computer which is connected with and controls one or more motors, e.g. DC motors, which turn the eccentric shaft, hereby changing the stroke length of the pump pistons.

This solution has the disadvantage that angular displacement and stroke length are not directly proportional but if a linear displacement of a toothed rod is selected instead, a direct proportionality is provided.

The lubricating apparatus is made with a slide piston with a diameter corresponding to the diameter of the slide chamber and with a slide rod having lesser diameter and which is in contact with the setting means. This construction enables implementation of an alternative system pressure in a relatively simple way as one may only need to change the diameter of the slide rod in the hydraulic slide.

Moreover, the construction is designed so that there is no mechanical joint between the hydraulic slide and the pump piston for the lubricating oil. This construction implies that the demands for mutual design tolerances for the two components are considerably reduced.

The apparatus is typically fed with one kind of cylinder lubricating oil, but in principle the oil supply may be arranged so that one may switch between one or more kinds of cylinder lubricating oils, either manually or automatically. This may be done for a connected apparatus or for a group of lubricating points. I practice; this may be done manually with a cock or automatically by means of an electrically controlled solenoid valve which may possibly also be controlled via the computer system.

The central computer of the computer system establishes a control for the dosing system according to the invention. According to a special embodiment, the central computer comprises two PCs: a main PC and a backup PC. Besides, there is provided a local control unit which is associated and controls one or two lubricating apparatuses. The local control unit controls the stroke and the timing for the associated lubricating apparatus or apparatuses.

The control is made so flexible that all current operational modes can be applied:
- rpm-dependent regulation, i.e. unregulated operation;
- bhp-dependent regulation, i.e. load dependent regulation of the amount of lubricating oil;
- mep-dependent regulation, i.e. cylinder pressure dependent regulation of lubricating oil; or
- load change dependent regulation, i.e. extra lubrication in connection with changes in load.

Besides, it is possible to establish a flexible control system enabling to a high degree user specified regulating algorithms, including:
- variants of standard operational modes;
- possibility of regulating algorithms that are entirely or partly based on customer specific data input, e.g. diverse sensor bases data input (FE-content, cylinder pressure, cylinder temperature etc.), the inputs applied to the entire engine or per cylinder;
- possibility of overlay modes where the user defines and describes reduction and/or increase percentages by himself.

According to a particular embodiment, the method according to the invention is peculiar in that the computer control is performed with a local control with the possibility of performing a local data collection in/at the individual cylinder and a superior control with the possibility of controlling the delivered amounts of lubricating oil corresponding to the expected/planned amounts of lubricating oil.

The decentralised computer establishes a local control whereby the user furthermore has the possibility of performing a local data collection in/at the individual cylinder and using these online data inputs for adjusting supply amounts and possible timing. One may e.g. mount temperature sensors in the cylinder and flowmeters on the fuel supply for individual cylinders and subsequently define how the local control of the decentralised computer is to regulate timing and amounts in relation thereto.

To this is added that the decentralised computer may be used for collecting local information about conditions for the individual cylinders, e.g. it will be possible to mount flowmeters and/or temperature sensors in individual lubricating apparatuses, and via the network to supply this information about conditions to the superior control of the central computer, in that way achieving possibility of e.g. checking that the supplied amounts of lubricating oil correspond to the expected/planned amounts of lubricating oil.

According to a further embodiment, the method according to the invention is peculiar in that in case of failure in a valve, a shift between doubled valves is established.

As part of the local control, there is incorporated possibility of doubling the valves for controlling the timing. This may e.g. be used in case that a lubricating apparatus does not "hit" as a result of a failing valve, and then switches to another valve. The latter error status may e.g. be identified by none of the pistons of the lubricating apparatus "hitting" in spite of the engine still running.

The decentralised computer may be provided in a local control unit which may be provided with local operation so that one shifts from "Automatic" to "Manual Operation". By "manual operation" the system may run timed or untimed and directly on the unit, and the stroke may either be extended or be reduced. In this way, a further level of redundancy is always incorporated.

The invention will then be explained in more detail with reference to the accompanying drawing, where

### Description of the Drawing

- Fig. 1: shows a schematic overview of a dosing system comprising a plurality of lubricating apparatuses according to the invention;
- Fig. 2: shows two perspective views of the lubricating apparatus according to Fig. 1;
- Fig. 3: shows a section perpendicular to the longitudinal direction of a lubricating apparatus 0according to Fig. 1;
- Fig. 4: shows a section in parallel with the longitudinal direction of a lubricating apparatus according to Fig. 1;
- Fig. 5: shows an overview of the hydraulic system comprising a lubricating apparatus according to the invention;
- Fig. 6: shows a detailed drawing for illustrating flow of hydraulic system oil in a lubricating apparatus comprised in a dosing system according to the invention;
- Figs. 7-9: show a variant providing the possibility of connecting/disconnecting lubricating and system oil during operation; and
- Figs. 10-11: show partial sectional views through further embodiments of the lubricating apparatus comprised in a dosing system according to the invention, in which there is possibility of adjusting the stroke length to zero.

### Detailed description of the invention

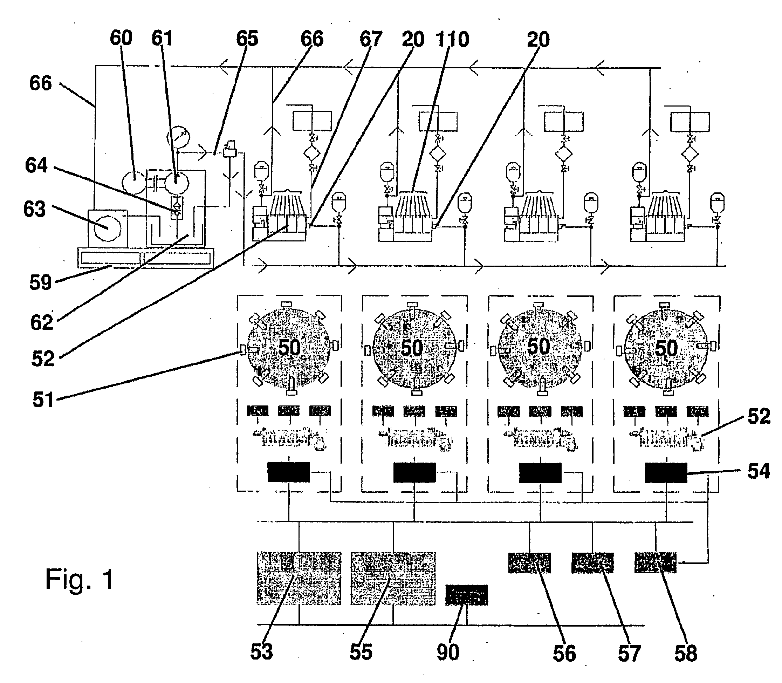

Fig. 1 shows schematically four cylinders 50 and on each cylinder appears eight injection nozzles 51. The lubricating apparatuses 52 are connected with a central computer 53, with local control units 54 typically for each single lubricating apparatus 52. The central computer 53 is coupled in parallel with a further control unit 55 constituting a backup for the central computer. In addition, there is established a monitoring unit 56 monitoring the pump, a monitoring unit 57 monitoring the load and a monitoring unit 58 monitoring the position of the crankshaft.

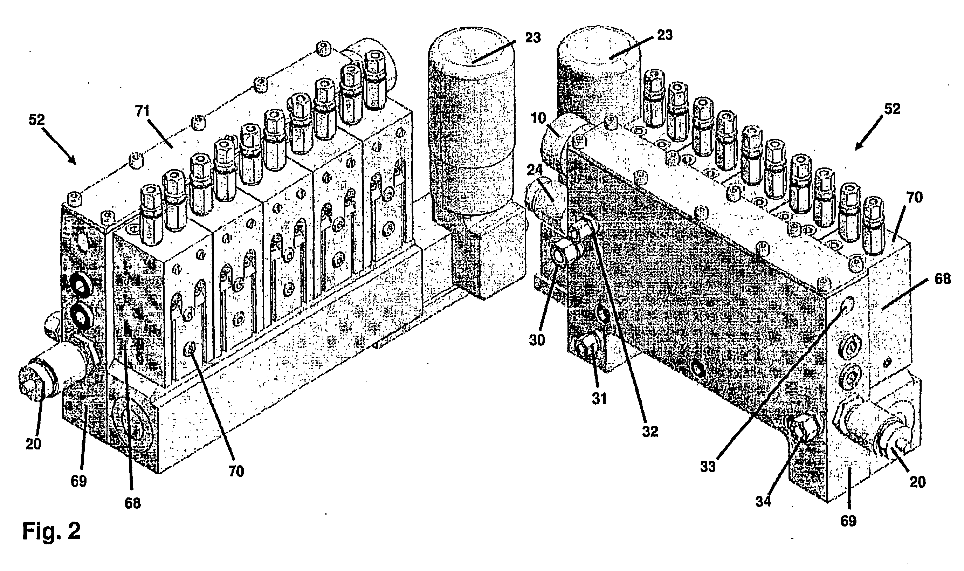

In the upper part of Fig. 1 there is shown a hydraulic station 59 comprising a motor 60 driving a pump 61 in a tank 62 for hydraulic oil. The hydraulic station 59 furthermore includes a cooler 63 and a filter 64. System oil is pumped via supply line 65 on to the lubricating apparatus via a valve 20. The hydraulic station is furthermore connected with a return line 66 which is also connected with the lubricating apparatus via a valve 24 (see e.g. Fig. 2).

Lubricating oil is forwarded to lubricating apparatus 52 via a line 67 from a lubricating oil supply tank (not shown). The lubricating oil is forwarded from the lubricating apparatus via lines 110 to the injection nozzles 51.

Fig. 2 shows perspective views of a lubricating apparatus 52, in front and rear views, respectively. The lubricating apparatus has solenoid valves 20, 24 coupled to a supply line and a return line for hydraulic oil. The lubricating apparatus 52 includes a cylinder block 68 and a base plate 69 that are interconnected. In the shown embodiment, the cylinder block 68 is divided into five separate blocks 70, each intended for serving two lubricating points. Each separate block 70 contains two pump pistons as will be explained below.

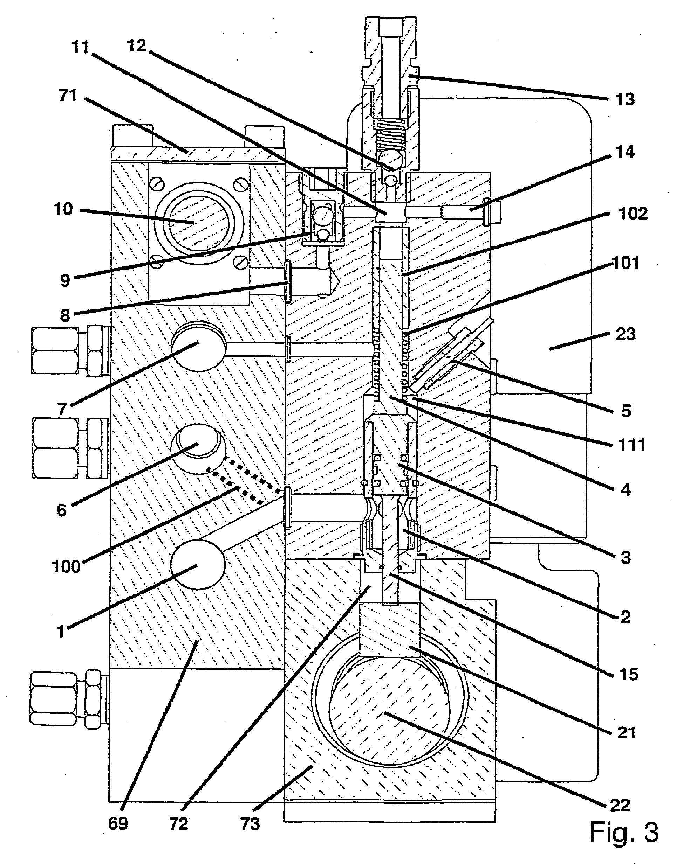

The base plate 69 contains channels and connections. Thus there is provided a connection 31 and 32 for draining off possibly leaking hydraulic oil and a drain 32 for possible leaking lubricating oil. Furthermore, there is provided an aperture 33 for supplying lubricating oil. Furthermore, there is provided a connection 34 for supplying hydraulic oil. The connection 31 is used for hydraulic oil leaking from eccentric housing 73 and the connection 32 is used for system/hydraulic oil and lubricating oil leaking from the cylinder block via the duct 7 in Fig. 3. The base plate 69 is closed with a lid 71, and under the lid 71 there is provided a heater 10 for the lubricating oil.

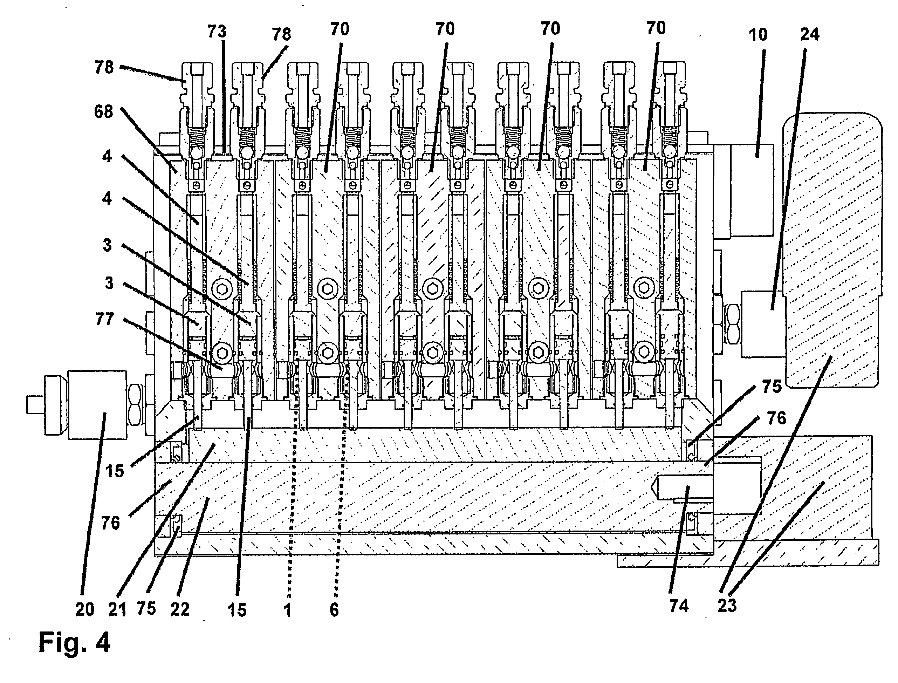

The lubricating apparatus furthermore includes a setting unit driven by a DC motor 23. Alternatively, another suited motor/actuator may be applied. As it more clearly appears from Fig. 3, the DC motor drives an eccentric shaft 22 which is in contact with a contact plate 21 disposed sliding in a recess 72 in a block 73 housing an eccentric shaft 22, and which is fastened to the base plate also supporting the cylinder block 68. The contact plate 21 is disposed between the eccentric shaft 22 and hydraulic slides 3 provided in a slide chamber 2, and which is in contact with a pump piston 4 provided in a pump chamber 111. A space 11 for the lubricating oil is provided above the pump piston 4. Associated with this space there is provided a spring-loaded double check valve 13 which includes a ball bearing against a seat 12 and connected with an injection nozzle 51. The check valve 13 is provided with a connection 78 (see Fig. 4) which is screwed into the cylinder block 68 and serving to connect a line 110 to the injection nozzle 51 at a lubricating point. In the cylinder block there is furthermore provided an inductive position sensor 5 in an inclining position for registering the slide 3 when this is in a bottom position.

In Figs. 3 and 4 furthermore appears a connecting channel 77 which is used for connecting two succeeding hydraulic slide chambers 2 under the slide 3 when the channels 1 and 6 and the slide chambers 2, also termed hydraulic pump compartments, are pressurised with the intention of displacing the slide 3 to its bottom position, whereby the pump piston 4 pumps out the lubricating oil portion located in the space 11. The connecting channel 77 enables flushing and thereby cooling of the cylinder block. The channel 7 serves to remove leakage of lubricating oil and/or hydraulic oil from the pump chamber 111. A channel 8 is provided for sucking lubricating oil through a double suction valve 9 into the pump chamber 11 when the pump piston 4 and the slide 3 return to a retracted position by the action of springs 101 around the pump piston 4 and bearing against a lining 102 around the pump piston 4. In Fig. 3 furthermore appears an inclining channel 100 for connecting the channels 1 and 6 via the connecting channel 77.

Fig. 4 shows a longitudinal section through the cylinder block 68. I appears that it is divided into five sub-blocks 70, each including two pump pistons 4 as described above. As it appears from Fig. 4, the motor 23 drives the eccentric shaft 22 via a connecting pin 74, the shaft 22 being solid or hollow, in a rotating movement as the shaft 22 is supported eccentrically by bearings 75 via eccentric journals 76. In the position shown, the shaft is disposed at a position farthest down from the pump units which are superposed. The contact plate 21 will thereby be disposed in a lowermost position, providing that the slides 3 and the pump pistons 4 in this position have the longest travel and thereby may yield the largest amount of lubricating oil per pump stroke. If the eccentric shaft is rotated 180°, the eccentric shaft 22 will push the contact plate 21 to an uppermost position, whereby the pump pistons 3 will yield the least dosing per pump stroke.

As seen from Fig. 4, the contact plate 21 will be in contact with the eccentric shaft 22 over a long distance compared with single contact points from slide pins 15, also called set pins. On this background, there is achieved a wide distribution of the load, and thereby prolongation of the service life.

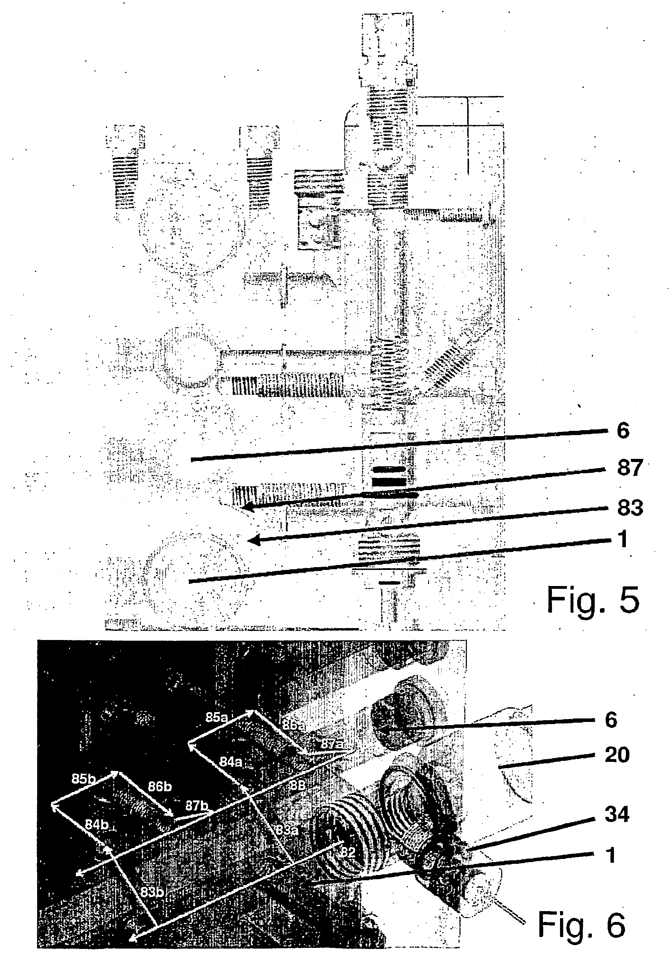

In Figs. 5 and 6 it is shown with references 81 - 88 how the travel will be for the hydraulic oil flow through the cylinder housing and the base plate. The hydraulic oil is fed in with flow 81 via the inlet 34 when the valve 20 is opened. The flow 82 goes through channel 1. This flow is divided into flow 83a,b conducts the oil into the cylinder block. Flow 84a,b is flow in drilled holes in the cylinder block conducting the oil to the channel 77. Flow 85a,b is conducted through the channel 77 and flow 87a,b passes through the channels 100. Flow 88 passes through the channel 6 to discharge through connection 30 via the valve 24. By means of this "circuit" it is possible to cool the lubricating apparatus via the hydraulic system by "flushing". This occurs by a process where both solenoid valves are kept open at the same time so that static oil is avoided. In the shown circuit there is provided a channel for each solenoid valve, and these two channels are connected via the drilled holes of the cylinder block. It appears that the drilled holes of the cylinder block are straight, but in the base plate the drilled holes are slightly different as there is provided an inclined first drilled hole which is connected with the channel 6 and an inclined second drilled hole connected with the channel 1. If the lubricating apparatus becomes too hot during normal operation, there is possibility of flushing the hydraulic system as the solenoid valves 20 and 24 are kept open at the same time.

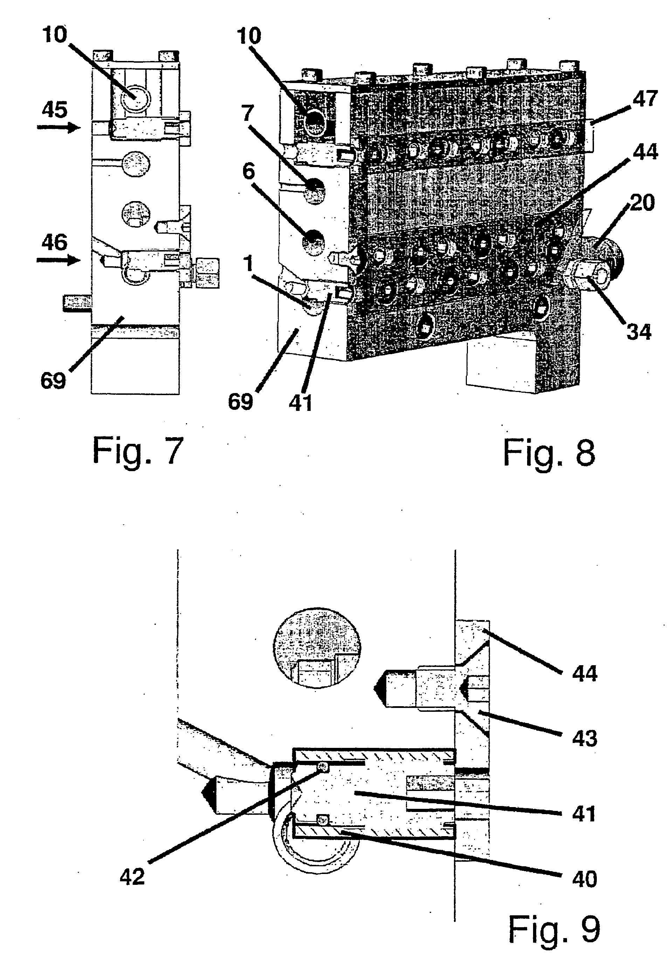

Figs. 7 - 9 show a design whereby it is possible to connect and disconnect lubricating and system oil with an apparatus which is in operation. This is effected in that all drilled holes in the base plate 69 towards to the cylinder block 68 are closed via a pointed closing screw 41 which is screwed to the bottom from the back side of the base plate, in this way shutting off the passage of system/hydraulic oil from the channels 1 and 6 and for the lubricating oil by the channel 45. The closing screw can be shaped in different ways, and in Fig. 9 is shown an embodiment where an O-ring 42 is mounted around the closing screw 41. The O-rings slide sealingly inside the cylinder 40 and in this way it is ensured that no oil gets out past the closing screw 41. Externally is provided a holder 44 and 47 ensuring that the cylinder 40 remains in place. The holder 44 and 47 is fastened with the screws 43.

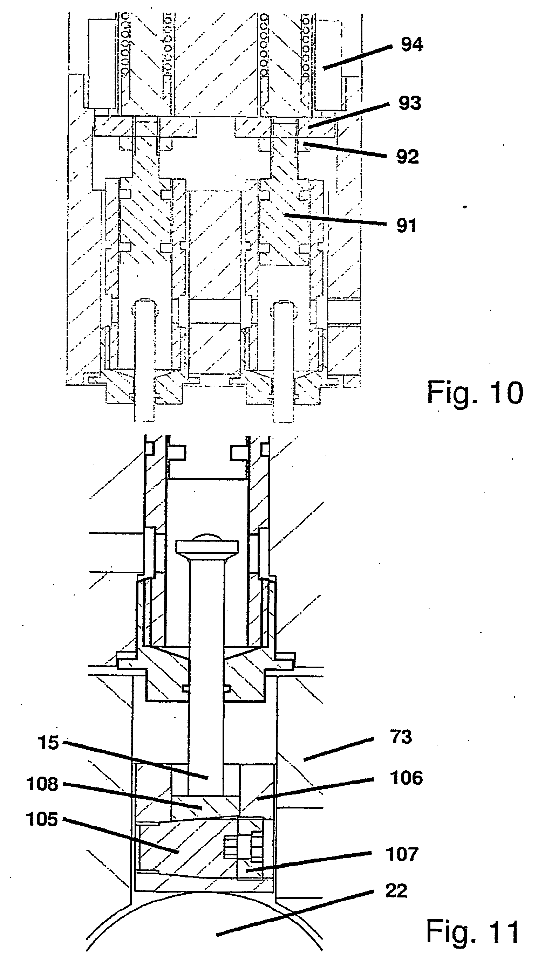

Figs. 10 and 11 show embodiments whereby it is possible to reset the stroke length. Fig. 10 shows an embodiment where a slide 91 can be adjusted in height by means of a thread. The slide 91 will then be secured to a contact plate 93. In order to ensure mutual position, there is provided a lock nut 92. This embodiment can be implemented by making a milled recess in the front of the cylinder block and then close the hole with a cover plate. In Fig. 11 appears a slightly simpler embodiment as the design of the contact plate 21 has been adapted so that it has a zero position for the stroke length at each lubricating point. The contact plate 106 is made with a drilled hole for a set pin 15 at each lubricating point. The set pin 15 bears on a plate 108 which is inclining so that a set screw 105 has a conical part that may be displaced in height on the plate 108. Furthermore, there is provided a lock nut that locks the set screw 105.

The dosing system comprising a lubricating apparatus has the following operational mode:
The lubricating apparatus has, as mentioned, two built-in solenoid valves 20, 24. When a pumping cycle starts, solenoid valve 20 opens and the system pressure (typically between 40 and 120 bar) is fed into the apparatus and pressurises the channels 1 and 6 and the hydraulic slide chamber 2 of the slide 3.

By supplying pressure, the hydraulic slide 3 is moved to the bottom, and together with this piston the pump piston 4 for lubricating oil is also forced to the bottom, and the lubricating oil in the space 11 in front of the pump piston is pressed out through the double check valve 13 with spring loading.

After the pump piston 3 has reached bottom position and activated the inductive position sensor 5, the superior control may register the sensor and check whether the stroke has been performed.

The solenoid valve 20 then closes at the inlet side, and after a defined time interval, the solenoid valve 24 opens at the outlet side and the pressure is removed from the channels 1 and 6. The springs around the pump pistons 4 return the piston 4 and the slide 3 to the starting position, and simultaneously new lubricating oil is sucked in through the channel 8 up through the double suction valve 9 and into the pump chamber 11.

The stroke length for the pump pistons 4 can be adjusted electronically by turning an eccentric shaft 22. In order to ensure even loading of the eccentric shaft 22, a contact plate 21 is disposed between this and set pins 15 for the slides 3 for the individual lubricating points.

Each lubricating point has a venting screw 14 (see Fig. 1) so that possible air in the pump chamber can be removed hereby.

If any system or lubricating oil should leak past respective pistons, this leak oil is gathered in the channel 7 and may be drained off in total from the lubricating apparatus.

## Claims

1. A dosing system comprising a hydraulic lubricating apparatus (52) for cylinder lubricating oil, e.g. in marine engines, the dosing system including
- a supply line (65) and a return line (66) connected with the lubricating apparatus (52) for supplying hydraulic oil,
- a central hydraulic oil supply pump (61) connected with the lubricating apparatus (52),
- a number of injection units (51) corresponding to a multiple of the cylinder number in the engine, and which are each connected with a respective dosing unit (4,111) in the lubricating apparatus (52);
- an adjusting unit with a setting means (21,22) in engagement with each dosing unit (3,15, 4,111) in order thereby to adjust the volume of injected cylinder lubricating oil in each lubricating stroke;
- a supply line (67) for cylinder lubricating oil;
- a controllable actuator/motor (23) engaging the setting means (21,22) for setting it; and
- a computer system for controlling, monitoring and detecting the functions of the lubricating apparatus
**characterised in that** the hydraulic lubricating apparatus includes
- a cylinder block (68,70) with a number of dosing units (4,111,3,15), each including a pump piston (4) mounted in a pump chamber (111) as well as a hydraulic slide (3,15) interacting with the setting means (21,22) and the pump piston (4) and which hydraulic slide (3,15) is provided in a slide chamber (2) extending largely coaxially with the pump chamber (111) and which may be pressurised with hydraulic oil via the supply line (65);
- a respective valve (20, 24) for the supply line (65) and the return line (66) thereby feeding and returning of the hydraulic oil for pressurising said slide chamber (2); and that
- the setting means (21,22) includes an eccentric shaft (22) engaging a contact plate (21) which is disposed sliding in a recess (72) between the eccentric shaft (22) and the hydraulic slides (3,15) of the lubricating apparatus (52)

2. A dosing system according to claim 1, **characterised in that** a monitoring sensor (5) associated with the lubricating apparatus (52), preferably with each dosing unit (4,111,3,15) for detecting performed stroke and/or performed dosing of amount of cylinder lubricating oil.

3. A dosing system according to claim 1 or 2, **characterised in that** the computer system includes
- a decentralised computer for controlling timing and stroke setting for the dosing units (4,111,3,15) in an associated cylinder block (68); and
- a central computer (53), which preferably includes a main computer and a backup computer (55), for adjusting relevant operation data, monitoring, logging etc.

4. A dosing system according to any preceding claim, **characterised in that** the hydraulic slide (3,15) is made of a slide piston (3) with a diameter corresponding to the diameter of the slide chamber (2) and with a slide pin (15) having a lesser diameter and which is in contact with the setting means (21,22).

5. A dosing system according to any preceding claim, **characterised in that** the the cylinder block (68) includes a block (70) where pumping and monitoring sections for two or more lubricating points are integrated.

6. A dosing system according to any preceding claim, **characterised in that** the lubricating apparatus (52) is sectioned, e.g. in groups of 2 - 4 blocks (70), which may be replaced individually, and that a plurality of valve sets (20,24) are mounted, whereby different activation times of each section (70) are enabled.

7. A dosing system according to any preceding claim, **characterised in that** connecting ducts (77) are provided between at least two juxtaposed slide chambers (2).

8. A dosing system according to any preceding claim, **characterised in that** the stroke of the longitudinally displacing slide (3) is determined by the eccentricity of the eccentric shaft (22) and rotation of the controllable motor (23).

9. A dosing system according to any one of claims 2 - 8, **characterised in that** the monitoring sensor (5) includes an inductive sensor disposed in an inclining face at the bottom of the slide chamber (2) for detecting when the slide (3) is in a bottom position.

10. A dosing system according to any preceding claim, **characterised in that** the valves (20,24) are provided as solenoid valves.

11. A dosing system according to any preceding claim, **characterised in that** the pump piston (4) and the hydraulic slide (3) are pressed into mutual contact without a mechanical assembling in order thereby to reduce the demand for construction tolerances.

12. A method for a dosing cylinder lubricating oil, e.g. in marine engines, the method including
- supplying hydraulic oil pressure via a feed and a return of hydraulic oil to and from a lubricating apparatus (52) by using a hydraulic oil supply system connected with the lubricating apparatus;
- supplying and injecting cylinder lubricating oil via a number of injection units (51) corresponding to a multiple of the cylinder number in the engine, and which are each connected with a corresponding dosing unit (4,111,3,15) in the lubricating apparatus (52);
- a computerised controlling, monitoring and detecting the functions of the method;
- bringing a setting means (21,22) to engage each dosing unit (4,111,3,15) in order thereby to enable adjusting the volume of injected cylinder lubricating oil by a lubricating stroke; and
- setting the setting means (21,22) by a controllable actuator/motor (23) engaging the setting means;
**characterised in that** it includes
- actuating valves (20,24) for activating the dosing units (4,111,3,15), each dosing unit including a pump piston (4) mounted in a pump chamber (111) as well as a hydraulic slide (3,15) interacting with the setting means (21,22) and the pump piston (4) and which hydraulic slide (3,15) is provided in a slide chamber (2) extending largely coaxially with the pump chamber (111) and thereby feeding and returning of the hydraulic oil for pressurising said slide chamber (2) with hydraulic oil for activating said slide (3,15) that interacts with the setting means (21,22) and a pump piston (4) for pumping a portion of lubricating oil at a lubricating point; and
- setting the amount of lubricating oil per pump stroke by rotating an eccentric shaft (22) engaging a contact plate (21) which is disposed sliding in a recess (72) between the eccentric shaft (22) and the hydraulic slides (3,15) of the lubricating apparatus (52).

13. Method according to claim 12, **characterised in that** the computer control is performed with a local control with the possibility of performing a local data collection in/at the individual cylinder and a superior control with the possibility of controlling the delivered amounts of lubricating oil corresponding to the expected/planned amounts of lubricating oil.

14. Method according to claim 12 or 13, **characterised in that** in case of failure in a valve, a shift between doubled valves is established.

15. Method according to claim 12, 13 or 14, **characterised in that** flushing is provided via a communication duct between at least two juxtaposed slide chambers in order thereby to achieve cooling.

16. Method according to claim 12, 13, 14 or 15, **characterised in that** the pump piston and the hydraulic slide are pressed into mutual contact without a mechanical assembling.

## Patentansprüche

1. Dosiersystem umfassend ein hydraulisches Schmiergerät (52) für Zylinderschmieröl, z.B. in Schiffsmaschinen, wobei das Dosiersystem folgendes aufweist:
- eine zur Versorgung mit Hydrauliköl mit dem Schmiergerät (52) verbundene Versorgungsleitung (65) sowie eine Rücklaufleitung (66),
- eine mit dem Schmiergerät (52) verbundene zentrale Hydraulikölversorgungspumpe (61),
- eine einer Mehrfachen der Maschinenzylinderzahl entsprechende Vielzahl von Einspritzeinheiten (51), die jeweils mit einer Dosiervorrichtung (4, 111) im Schmiergerät (52) verbunden sind;
- eine Justiereinheit mit einem Einstellmittel (21, 22) in Eingriff mit einem jeweiligen Dosiervorrichtung (3, 15, 4, 111) zum Justieren der mit jedem Schmierschlag eingespritzten Zylinderschmierölmenge;
- eine Versorgungsleitung (67) für Zylinderschmieröl;
- ein steuerbares Betätigungsmittel/einen steuerbaren Motor (23) in Eingriff mit dem Einstellmittel (21, 22) zum Einstellen davon, und
- ein Rechnersystem zum Steuern, Überwachen und Erfassen der Funktionen des Schmiergeräts,
**dadurch gekennzeichnet, daß** das hydraulische Schmiergerät folgendes aufweist:
- einen Zylinderblock (68, 70) mit einer Vielzahl von Dosiervorrichtungen (4, 111, 3, 15), die jeweils einen in einer Pumpenkammer (111) angeordneten Pumpenkolben (4) aufweisen, sowie einen hydraulischen Gleiter (3, 15), der mit dem Einstellmittel (21,22) und dem Pumpenkolben (4) wechselwirkt, wobei der hydraulische Gleiter (3, 15) in einer hauptsächlich koaxial zur Pumpenkammer (111) angeordneten Gleitkammer (2), die durch die Versorgungsleitung (65) mit Hydrauliköl unter Druck gesetzt werden kann, vorgesehen ist;
- ein jeweiliges Ventil (20, 24) für die Versorgungsleitung (65) und die Rücklaufleitung (66), wobei das Hydrauliköl eingespeist und zurückgeführt wird zum Unterdrucksetzen der Gleitkammer (2); und daß
- das Einstellmittel (21, 22) eine Exzenterwelle (22) aufweist, die mit einer in einer Ausnehmung (72) zwischen der Exzenterwelle (22) und den hydraulischen Gleitern (3, 15) des Schmiergeräts (52) gleitend angeordneten Kontaktplatte (21) eingreift.

2. Dosiersystem nach Anspruch 1, **dadurch gekennzeichnet, daß** ein Überwachungsfühler (5) dem Schmiergerät (52), vorzugsweise der jeweiligen Dosiereinheit (4, 111, 3, 15), zugeordnet ist zum Erfassen des durchgeführten Schlags und/oder der durchgeführten Dosierung der Zylinderschmierölmenge.

3. Dosiersystem nach Anspruch 1 oder 2, **dadurch gekennzeichnet, daß** das Rechnersystem folgendes aufweist:
- einen dezentralisierten Rechner zur Zeitsteuerung und Steuerung des Schlageinstellens der Dosiereinheiten (4, 111, 3, 15) in einem zugeordneten Zylinderblock (68); und
- einen zentralen, vorzugsweise einen Hauptrechner und einen Datensicherungsrechner (55) umfassenden Rechner (53) zum Justieren von relevanten Betriebsdaten, Überwachung, Logging etc.

4. Dosiersystem nach irgendeinem der vorhergehenden Ansprüche, **dadurch gekennzeichnet, daß** der hydraulische Gleiter (3, 15) aus einem Gleitkolben (3) gebildet ist, der einen dem Gleitkammerdurchmesser entsprechenden Durchmesser aufweist, und der einen mit kleinerem Durchmesser und mit dem Einstellmittel (21, 22) in Kontakt stehenden Gleitstift (15) aufweist.

5. Dosiersystem nach irgendeinem der vorhergehenden Ansprüche, **dadurch gekennzeichnet, daß** der Zylinderblock (68) einen Block (70) umfaßt, wobei die Pumpen- und Überwachungsabschnitte für zwei oder mehrere Schmierpunkte integriert sind.

6. Dosiersystem nach irgendeinem der vorhergehenden Ansprüche, **dadurch gekennzeichnet, daß** das Schmiergerät (52) sektionsgeteilt ist, z.B. in Gruppen von 2 - 4 Blöcken (70), die individuell ersetzbar sind, und daß eine Vielzahl von Ventilsätzen (20, 24) vorgesehen ist, wobei unterschiedliche Betätigungszeiten jeder Sektion (70) ermöglicht werden.

7. Dosiersystem nach irgendeinem der vorhergehenden Ansprüche, **dadurch gekennzeichnet, daß** Verbindungsröhre (77) zwischen wenigstens zwei nebeneinanderliegenden Gleitkammern (2) angeordnet sind.

8. Dosiersystem nach irgendeinem der vorhergehenden Ansprüche, **dadurch gekennzeichnet, daß** der Schlag des in der Längsrichtung verschiebbaren Gleiters (3) durch die Exzentrizität der Exzenterwelle (22) und die Rotation des steuerbaren Motors (23) festgelegt wird.

9. Dosiersystem nach irgendeinem der vorhergehenden Ansprüche 2-8, **dadurch gekennzeichnet, daß** der Überwachungsfühler (5) einen induktiven, in einer Schrägfläche am Boden des Gleitkammers (2) angeordneten Fühler zum Erfassen des eventuellen Vorhandenseins des Gleiters (3) in der Bodenposition aufweist.

10. Dosiersystem nach irgendeinem der vorhergehenden Ansprüche, **dadurch gekennzeichnet, daß** die Ventile (20, 24) als Magnetventile vorgesehen sind.

11. Dosiersystem nach irgendeinem der vorhergehenden Ansprüche, **dadurch gekennzeichnet, daß** der Pumpenkolben (4) und der hydraulische Gleiter (3) ohne mechanischen Zusammenbau zur Beschränkung von dem Bedarf an Bautoleranzen in gegenseitigen Kontakt gedrückt werden.

12. Verfahren zum Dosieren von Zylinderschmieröl, z.B. in Schiffsmaschinen, wobei das Verfahren folgendes umfaßt:
- Zufuhr eines Hydrauliköldruckes durch ein Speisen von Hydrauliköl in das Schmiergerät (52) und Rücklauf aus dem Schmiergerät (52) durch die Verwendung eines mit dem Schmiergerät verbundenen Hydraulikölversorgungssystems,
- Versorgen und Einspritzen von Zylinderschmieröl durch eine einem Mehrfachen der Maschinenzylinderzahl entsprechende Vielzahl von Einspritzeinheiten (51), die jeweils mit einer Dosiervorrichtung (4, 111, 3, 15) im Schmiergerät (52) verbunden sind;
- ein rechnergestütztes Steuern, Überwachen und Erfassen der Funktionen des Verfahrens;
- jede Dosiereinheit (4, 111, 3, 15) zum Eingreifen mit einem Einstellmittel (21, 22) zu bringen und somit die Justierung der Menge des durch einen Schmierschlag eingespritzten Zylinderschmieröls zu ermöglichen; und
- Einstellen der Einstellmittel (21, 22) durch eine/n mit dem Einstellmittel eingreifende/n, steuerbare/n Betätigungsvorrichtung/Motor (23);
**dadurch gekennzeichnet, daß** das Verfahren folgendes umfaßt:
- Betätigung von Ventilen (20, 24) zum Betätigen der Dosiereinheiten (4, 111, 3, 15), wobei jede Dosiereinheit einen in einer Pumpenkammer (111) angeordneten Pumpenkolben (4) sowie einen mit dem Einstellmittel (21,22) und dem Pumpenkolben (4) wechselwirkenden hydraulischen Gleiter (3, 15) aufweist, wobei der hydraulische Gleiter (3, 15) in einer hauptsächlich koaxial zur Pumpenkammer (111) angeordneten Gleitkammer (2) vorgesehen ist und somit zum Unterdrucksetzen der Gleitkammer (2) mit Hydrauliköl das Hydrauliköl einspeist und zurückführt zum Betätigen des mit dem Einstellmittel (21, 22) und einem Pumpenkolben (4) wechselwirkenden Gleiters (3, 15), zum Pumpen einer Schmierölmenge am Schmierpunkt; und
- Einstellen der Schmierölmenge pro Pumpenschlag durch das Rotieren einer Exzenterwelle (22), die mit einer in einer Ausnehmung (72) zwischen der Exzenterwelle (22) und den hydraulischen Gleitern (3, 15) des Schmiergeräts (52) gleitend angeordneten Kontaktplatte (21) eingreift.

13. Verfahren nach Anspruch 12, **dadurch gekennzeichnet, daß** die Rechnersteuerung durch eine örtlichen Steuerung durchgeführt wird, wobei örtliche Dateneinsammlung in/am individuellen Zylinder ermöglicht wird, sowie eine überordnete Steuerung, wobei die Steuerung der den erwarteten/geplanten Schmierölmengen entsprechenden, eingespritzten Schmierölmengen ermöglicht wird.

14. Verfahren nach Anspruch 12 oder 13, **dadurch gekennzeichnet, daß** im Falle von Ventilausfall ein Wechsel zwischen den verdoppelten Ventilen durchgeführt wird.

15. Verfahren nach Anspruch 12, 13 oder 14, **dadurch gekennzeichnet, daß** zwecks Kühlung eine Spühlung durch ein zwischen wenigstens zwei nebeneinanderliegenden Gleitkammern befindliches Verbindungsrohr durchgeführt wird.

16. Verfahren nach Anspruch 12, 13, 14 oder 15, **dadurch gekennzeichnet, daß** der Pumpenkolben und der hydraulische Gleiter ohne mechanisches Zusammenbau in gegenseitigen Kontakt gedrückt werden.

## Revendications

1. Système de dosage comprenant un appareil de lubrification hydraulique (52) pour de l'huile lubrifiante de cylindre, par exemple dans les moteurs marins, le système de dosage comprenant :
- une conduite d'alimentation (65) et une conduite de retour (66) connectée à l'appareil de lubrification (52) pour l'alimentation en huile hydraulique,
- une pompe centrale d'alimentation en huile hydraulique (61) connectée à l'appareil de lubrification (52),
- un nombre d'unités d'injection (51) correspondant à plusieurs nombres de cylindres dans le moteur, et qui sont connectées chacune à une unité de dosage respective (4,111) dans l'appareil de lubrification (52) ;
- une unite d'ajustage ayant un moyen de réglage (21, 22) engagé dans chaque unité de dosage (3,15,4,111) pour ainsi ajuster le volume d'huile lubrifiante de cylindre injectée à chaque course de lubrification ;
- une conduite d'alimentation (67) pour de l'huile lubrifiante de cylindre ;
- un actionneur/moteur de commande (23) engageant le moyen de réglage (21,22) pour le régler, et
- un système informatique pour contrôler, surveiller et détecter les fonctions de l'appareil de lubrification
**caractérisé en ce que** l'appareil de lubrification hydraulique comprend
- un bloc cylindre (68,70) avec un nombre d'unités de dosage (4,111,3,15) comprenant chacune un piston de pompe (4) monté dans une chambre de pompe (111) ainsi qu'un coulisseau hydraulique (3,15) interagissant avec le moyen de réglage (21,22) et le piston de pompe (4), lequel coulisseau hydraulique (3,15) est réalisé dans une chambre de coulisseau (2) s'étendant en grande partie de façon coaxiale avec la chambre de pompe (111) et qui peut être sous pression avec de l'huile hydraulique par la conduite d'alimentation (65) ;
- une soupape respective (20, 24) pour la conduite d'alimentation (65) et la conduite de retour (66) et ainsi alimenter et retourner l'huile hydraulique pour obtenir une pression dans ladite chambre de coulisseau (2) ; et que
- le moyen de réglage (21,22) comprenant un arbre excentrique (22) qui engage une touche (21) disposée de façon coulissant dans un emboîtement (72) entre l'arbre excentrique (22) et les coulisseaux hydrauliques (3,15) de l'appareil de lubrification (52).

2. Système de dosage selon la revendication 1, **caractérisé en ce qu'**un capteur de surveillance (5) est associé à l'appareil de lubrification (52), de préférence avec chaque unité de dosage (4,111,3,15) pour détecter une course effectuée et/ou un dosage effectué d'un montant d'huile lubrifiante de cylindre.

3. Système de dosage selon la revendication 1 ou 2, **caractérisé en ce que** le système informatique comprend
- un ordinateur décentralisé pour controller le réglage du minutage et de la course pour les unités de dosage (4,111,3,15) dans un bloc cylindre associé (68) ; et
- un ordinateur central (53) qui comprend de préférence un ordinateur principal et un ordinateur de sauvegarde (55) pour ajuster des données opérationnelles pertinentes, surveiller, journaliser etc.

4. Système de dosage selon l'une quelconque des revendications précédentes, **caractérisé en ce que** le coulisseau hyraulique (3,15) est fabriqué d'un piston de coulisseau (3) ayant un diamètre correspondant au diamètre de la chambre de coulisseau (2) et un goujon de coulisseau (15) ayant un diamètre inférieur et qui est en contact avec le moyen de règlage (21,22).

5. Système de dosage selon l'une quelconque des revendications précédentes, **caractérisé en ce que** le bloc cylindre (68) comprend un bloc (70) où sont intégrées des sections de pompage et de surveillance pour deux ou plusieurs points de lubrification.

6. Système de dosage selon l'une quelconque des revendications précédentes, **caractérisé en ce que** l'appareil de lubrification (52) est sectionné, par exemple dans des groupes à 2-4 blocs (70) qui peuvent être remplacés individuellement, et que plusieurs séries de soupapes (20,24) sont montées, avec lesquelles des différents temps d'activation de chaque section (70) sont rendu possible.

7. Système de dosage selon l'une quelconque des revendications précédentes, **caractérisé en ce qu'**il est prévu des conduits de connection (77) entre au moins deux chambres de coulisseau (2) situées l'une à côté de l'autre.

8. Système de dosage selon l'une quelconque des revendications précédentes, **caractérisé en ce que** la course du coulisseau (3) qui se déplace de façon longitudinale est déterminée par l'excentricité de l'arbre excentrique (22) et la rotation du moteur de commande (23).

9. Système de dosage selon l'une quelconques des revendications 2-8, **caractérisé en ce que** le capteur de surveillance (5) comprend un capteur inductif disposé sur une surface inclinée au fond de la chambre de coulisseau (2) pour détecter si le coulisseau (3) se trouve dans une position basse.

10. Système de dosage selon l'une quelconque des revendications précédentes, **caractérisé en ce que** les soupapes (20,24) sont réalisées comme des soupapes solénoïdes.

11. Système de dosage selon l'une quelconque des revendications précédentes, **caractérisé en ce que** le piston de pompe (4) et le coulisseau hydraulique (3) sont pressés jusqu'à un contact mutuel sans un assemblage mécanique pour ainsi réduire la demande vis-à-vis les tolérances de construction.

12. Procédé de dosage de l'huile lubrifiante de cylindre, par exemple dans les moteurs marins, le procédé comprend
- fournir une pression d'huile hydraulique par une alimentation et un retour de l'huile hydraulique vers et à partir d'un appareil de lubrification (52) en utilisant un système d'alimentation en huile hydraulique connecté à l'appareil de lubrification ;
- alimenter et injecter de l'huile lubrifiante de cylindre par un nombre d'unités d'injection (51) correspondant à plusieurs nombres de cylindres dans le moteur, et qui sont connectées chacune à une unité de dosage (4,111,3,15) correspondante dans l'appareil de lubrification (52) ; et
- contrôler, surveiller et détecter par ordinateur les fonctions du méthode ;
- faire engager un moyen de réglage (21,22) à chaque unité de dosage (4,111,3,15) pour ainsi rendre possible l'ajustage du volume de l'huile lubrifiante de cylindre injectée par une course de lubrification ; et
- régler le moyen de réglage (21,22) par un actionneur/moteur de commande (23) engageant le moyen de réglage ;
**caractérisé en ce qu'**il comprend
- actionner des soupapes (20,24) afin d'actionner les unités de dosage (4,111,3,15), chaque unité de dosage comprenant un piston de pompe (4) monté dans une chambre de pompe (111) ainsi qu'un coulisseau hydraulique (3,15) interagissant avec le moyen de réglage (21,22) et le piston de pompe (4), lequel coulisseau hydraulique (3,15) est réalisé dans une chambre de coulisseau (2) s'étendant en grande partie de façon coaxiale avec la chambre de pompe (111) et ainsi alimenter et retourner l'huile hydraulique pour obtenir une pression dans ladite chambre de coulisseau (2) avec de l'huile hydraulique pour actionner ledit coulisseau (3,15) qui interagit avec le moyen de réglage (21,22) et le piston de pompe (4) afin de pomper une portion d'huile lubrifiante à un point de lubrification ; et
- régler le montant de l'huile lubrifiante à chaque course de pompe en tournant un arbre excentrique (22) engageant une touche (21) qui est disposée de façon coulissant dans un emboîtment (72) entre l'arbre excentrique (22) et les coulisseaux hydrauliques (3,15) de l'appareil de lubrification (52).

13. Procédé selon la revendication 12, **caractérisé en ce que** l'ordinateur de contrôle est réalisé avec un contrôle local avec la possibilité d'effectuer une collection de données locale dans le/au cylindre individuel et un contrôle supérieur avec la possibilité de contrôler les montants de l'huile lubrifiante livrés correspondant aux montants prévus/projetés de l'huile lubrifiante.

14. Procédé selon la revendication 12 ou 13, **caractérisé en ce qu'**un changement entre des soupapes doubles est établit en cas de défaillance.

15. Procédé selon la revendication 12, 13 ou 14, **caractérisé en ce qu'**il est prévu une injection par un conduit de communication entre au moins deux chambres de coulisseau situées l'une à côté de l'autre pour ainsi obtenir un refroidissement.

16. Procédé selon la revendication 12, 13, 14 ou 15, **caractérisé en ce qu'**le piston de pompe et le coulisseau hydraulique sont pressés jusqu'à un contact mutuel sans assemblage mécanique.
